Europäisches Patentamt

European Patent Office

Office européen des brevets

(11) Publication number: **0 266 096**
**A1**

## EUROPEAN PATENT APPLICATION

(21) Application number: 87309092.2

(51) Int. Cl.4: **F16H 25/08**

(22) Date of filing: **14.10.87**

(30) Priority: **23.10.86 GB 8625351**

(43) Date of publication of application:
**04.05.88 Bulletin 88/18**

(84) Designated Contracting States:
**AT BE CH DE ES FR GB GR IT LI LU NL SE**

(71) Applicant: **THORN EMI PLC**
**Thorn Emi House Upper Saint Martin's Lane**
**London, WC2H 9ED(GB)**

(72) Inventor: **Williams, Anthony Michael**
**4, Syke Ings Richings Park**
**Iver Buckinghamshire(GB)**

(74) Representative: **Fleming, Ian Alexander et al**
**THORN EMI Patents Limited The Quadrangle**
**Westmount Centre Uxbridge Road**
**Hayes Middlesex, UB4 0HB(GB)**

(54) Linear drive mechanism.

(57) A linear drive mechanism suitable for use in a robotic manipulator arrangement comprises a rotary motor 1 for directly driving a frame 3 along a linear track 5. The frame is drivingly coupled to a load 6 by means of a pair of steel bands 7, 7′ which pass over pulleys 8, 8′ mounted at opposite ends of the frame. The load member is displaced, relative to the frame, in response to, and in the same sense as, a displacement of the frame member.

FIG.1

# LINEAR DRIVE MECHANISM

This invention relates to a linear drive mechanism and it relates particularly, though not exclusively, to a linear drive mechanism suitable for driving a robotic manipulator along a linear track.

Linear drive mechanisms are, or course, known. One such mechanism, designed to translate a rotary drive into a linear drive, includes a rotary motor which is arranged to drive a lead screw, a load coupled directly to the lead screw being driven along a linear track. In some applications, particularly industrial applications, it is possible that the combined inertia of the drive motor and the lead screw could exceed that of the driven load by about an order of magnitude, and, in these circumstances, the size, weight and cost of the drive mechanism could be prohibitive.

Other known drive mechanisms employing belt or wire systems do not, in general, fully utilise the drive motor and can, therefore, be inefficient.

It is one object of the present invention to provide a linear drive mechanism which alleviates at least some of the above-described problems, and it is a further object of the invention to provide a linear drive mechanism which can be used to drive a robotic manipulator along a linear track.

According to the invention there is provided a linear drive mechanism comprising a frame member, means for driving the frame member in a linear direction, and means to drivingly couple the frame member to a load member, the coupling means being so arranged that, in use, the load member is displaced in said linear direction, relative to said frame member, in response to, and in the same sense as, a displacement of the frame member and whereby a displacement of the load in said linear direction exceeds that of the frame member.

During a given interval of time the load member travels a greater distance along the track than does the frame member. As, compared with known, directly driven mechanisms, the inventor finds that although the linear drive force required to be executed by the motor at the frame member is increased, the velocity and acceleration required of the motor are reduced. Particularly for high speed motions of the load member this mechanism gives greater flexibility in drive selection and allows better balance of drive and driven inertias to be achieved.

Said frame member and said load member may be mounted on a common guide member for displacement along said track.

Said load member may be coupled to the frame member by a belt system, which may consist of a pair of belts, the ends of one belt of the pair being attached respectively to the load member and to the frame member and the ends of the other belt of the pair being attached respectively to the load member and to a location fixed with respect to both the load member and the frame member.

The linear drive mechanism may be suitable for use in a robotic manipulator arrangement and, in that case, said load member includes a robotic manipulator.

An embodiment of the invention is now described, by way of example only, by reference to the accompanying drawings of which:-

Figure 1 illustrates, diagramatically a side view of a linear drive mechanism in accordance with the present invention and is useful in understanding the operating principle of the mechanism,

Figure 2 shows a generalised perspective view of a robotic manipulator arrangement which may include the linear drive mechanism in accordance with the invention,

Figure 3 shows a transverse, cross-sectional view through a linear drive mechanism as embodied in the system of Figure 2,

Figures 4 to 6 illustrate diagramatically different configurations of the robotic manipulator arrangement of Figure 2 and Figure 7 shows how a number of the robotic manipulator arrangements may be combined in a linear configuration.

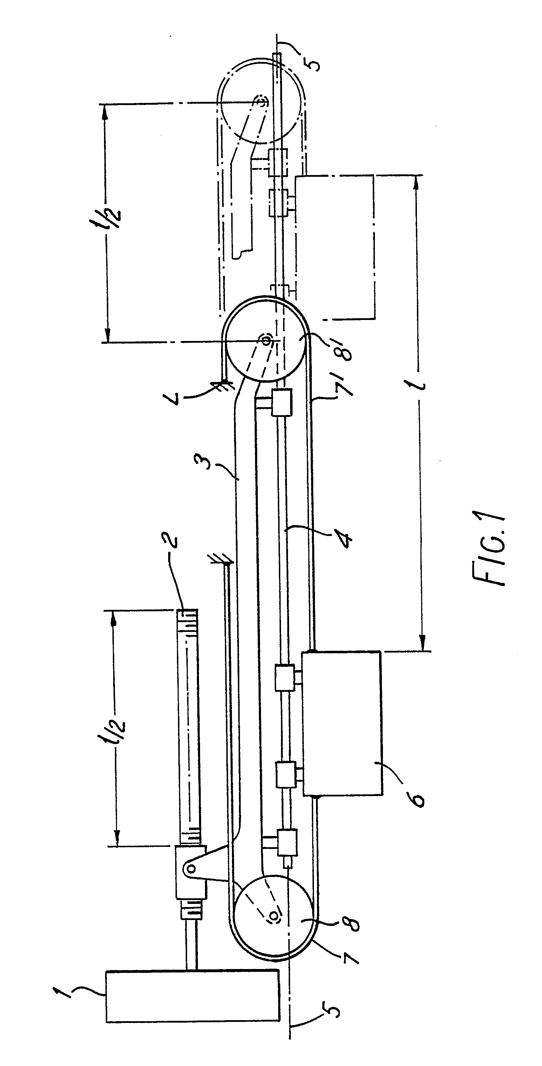

The drive mechanism illustrated diagramatically in Figure 1 of the drawings includes a rotary motor 1 which is arranged to drive a lead screw 2, assumed to be $l/2$ in length. The lead screw drives a frame member 3 which is supported by, and guided along, a slideway 4 defining a linear track 5. The slideway also supports and guides a driven load represented generally as a block 6 in the drawing.

As will be apparent, the load can move along the track relative to the frame member, but is coupled drivingly thereto by means of two steel bands 7,7' which pass around pulleys 8,8', mounted at opposite ends of the frame member. The ends of one of the bands (7) are attached respectively to the load member and to the frame member and the ends of the other band (7') are attached respectively to the load member and to a location L which is fixed with respect to the load member and the frame member.

It will be appreciated that if the frame member is displaced through a distance $l/2$, the maximum travel permitted by the lead screw, the load will be displaced through twice that distance, during the same interval of time, the final position of the frame member and the load member being represented in broken outline.

As compared with hitherto known mechanisms, wherein the load is driven directly, the velocity and acceleration required of the motor are reduced significantly, and the length and diameter of the lead screw may also be reduced. These factors can lead to a more efficient, cost-effective mechanism.

The inventors envisage that a linear drive mechanism in accordance with this invention has wide applicability, especially in an industrial environment where the driven loads can be relatively large.

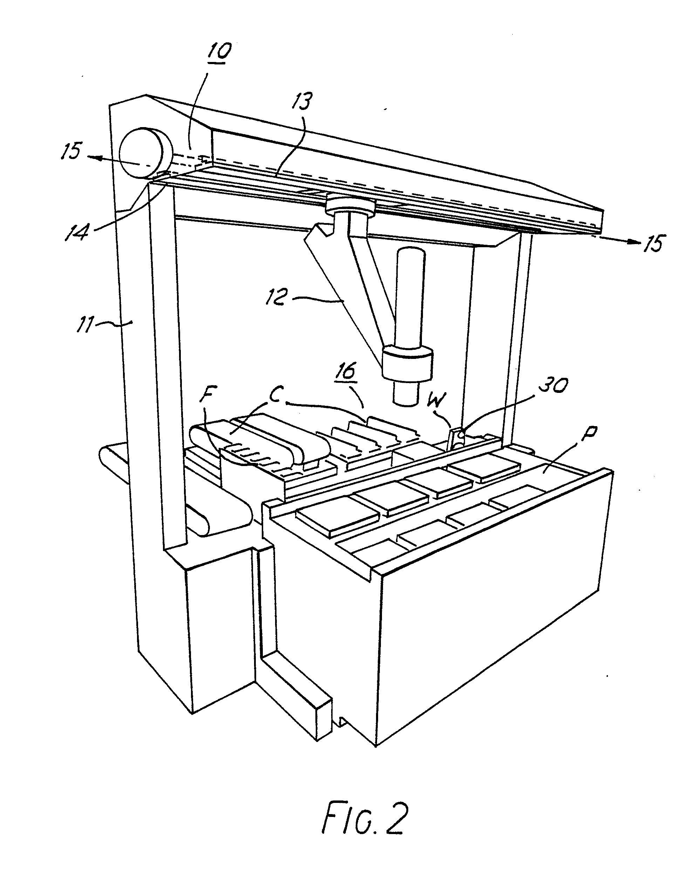

In one application of the invention, the drive mechanism is embodied in a robotic manipulator arrangement illustrated generally in Figure 2 of the drawings, this system being particularly, though not exclusively, suited to assembly tasks.

The drive mechanism, shown generally at 10, is mounted on a gantry 11, and is used to drive a robotic manipulator 12 along a pair of slideways 13, 14 which define a linear, horizontal track 15. As will be described in greater detail hereafter, the robotic manipulator can move within a well-defined work cell above a generally rectangular work table 16 where a number of assembly and/or processing tasks are carried out.

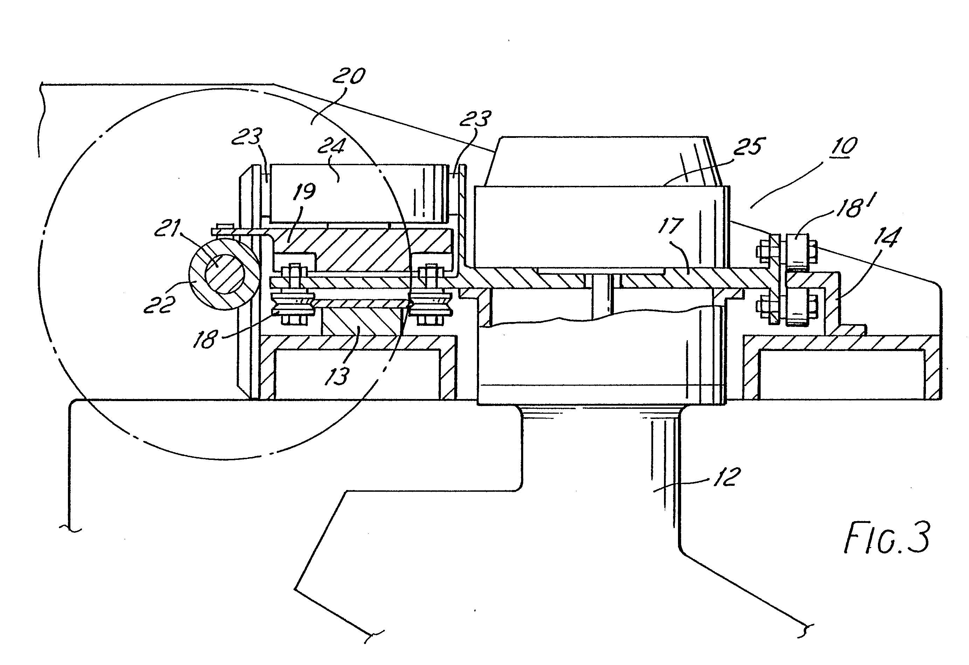

Figure 3, of the drawings shows a cross-sectional view through drive mechanism 10, taken transversely of slideways 13, 14 and illustrates how the mechanism could be configured in practice.

Referring to Figure 3, a load member (corresponding to component 16 in Figure 1) comprises a generally flat plate 17 which supports the manipulator 12, as shown. The plate itself is supported on, and guided along, each slideway by means of a respective pair 18, 18′ of rollers, slideway 14 and the associated rollers 18′ being used chiefly to stabilise the plate. A frame member 19 (corresponding to component 3 in Figure 1) is also supported on slideway 13 by another set of rollers (not shown) and a rotary motor, shown generally at 20, transmits drive to the frame member vis a lead screw 21 which extends lengthwise of the slideways (i.e. parallel to track 15) and meshes with a lead nut 22 attached to the frame member. As before, the load member is capable of movement along track 15, relative to the frame member, but is coupled drivingly thereto by means of two steel bands (eg 23) which pass around two pulleys, of which only one, 24, is shown in the drawing, mounted on the frame member. These bands are attached exactly as described hereinbefore by reference to Figure 1.

The robotic manipulator arrangement, shown generally in Figure 2, includes a first manipulator 11 supported by, and displaceable along, slideways 13, 14 above the work table 16, and a second manipulator 30 mounted on the table at a work station W.

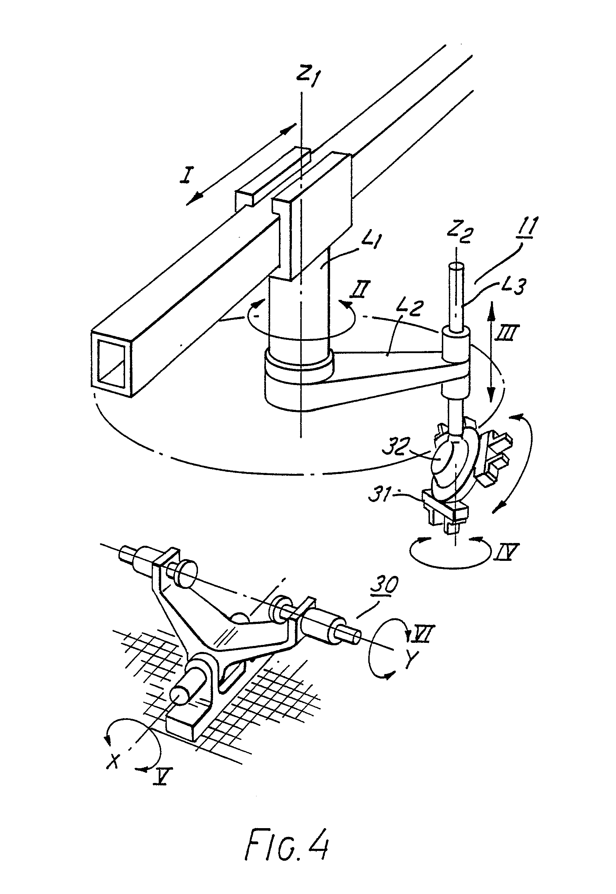

For clarity of illustration the manipulators 11 and 30 have been represented diagramatically in Figure 4. The first manipulator 11 includes a first limb L(1) which is mounted on the slideway and aligned on a first vertical axis $Z_1$, a second limb L-(2) rotatable about axis $Z_1$, and a third limb L(3) which mounts an end effector, typically a gripper device 31, which is displaceable along, and rotatable about, a second vertical axis $Z_2$. The second manipulator 30 is arranged to grip a work piece and is rotatable with respect to the table about two mutually orthogonal axes (X,Y) lying in a plane parallel to the work table.

It will be apparent that this manipulator arrangement has a total of six degrees of freedom which are distributed between the first and second manipulators, four degrees of freedom (designated as I, II, III and IV) being ascribed to the first manipulator and the remaining two (designated as V and VI) being ascribed to the second manipulator.

These degrees of freedom comprise:-

I - translation along a horizontal axis (x). Such translation could be effected by means of a linear drive mechanism as described herein by reference to Figure 3, though it will be understood that, in general, alternative forms of drive could be used.

II - rotation about the first vertical axis $Z_1$. This can be effected by a rotary drive motor as shown at 25 in Figure 3.

III - translation of the end effector along the second vertical axis $Z_2$.

IV - rotation of the end effector about the second vertical axis.

V and VI - rotation about mutually orthogonal axes X and Y.

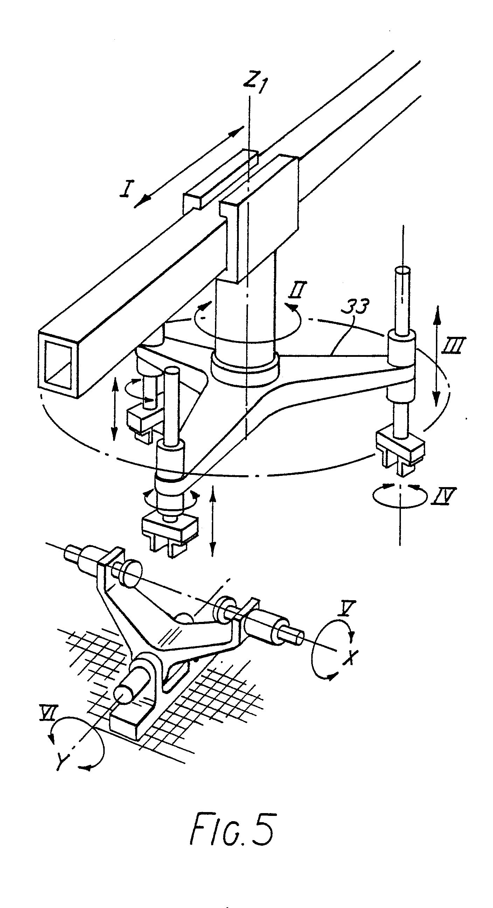

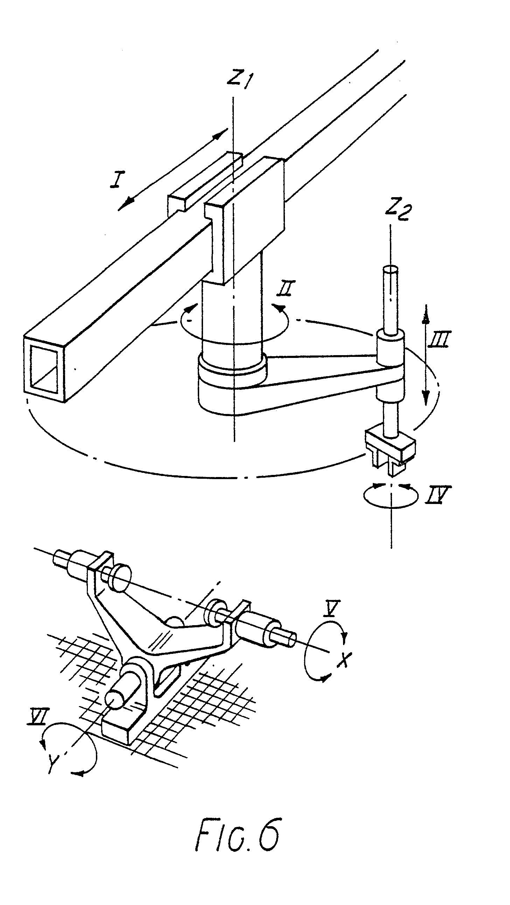

The inventors have found that a distributed system of this kind can achieve relative simplicity in regard to both kinematics and drive control. As compared with more complex systems, such as the known six axis, anthropomorphic robot, a distributed system may be more cost effective and yet still offers the flexibility needed to perform a wide range of assembly and/or processing tasks within the same job sequence. Moreover, the gripper device 31 may be interchanged with any of a number of different gripper units, each dedicated to a specific task, held at a "finger change" station, referenced at F in Figure 3, and with this facility the system can acquire an even greater flexibility permitting a wider variety of tasks to be performed. A finger charge mechanism suitable for this application is described in our copending European Patent application, Publication No. 0168945. If desired the interchange facility may be augmented by providing a number (3 say) of gripper devices on a common rotary indexing head, referenced at 32 in Figure 4. Alternatively, as shown in Figure 5, each gripper device could be mounted individually on a respective one of a number of arms 33 distributed evenly about vertical axis $Z_1$. Alternatively, of course, one gripper device only could be used as shown in Figure 6.

The system illustrated, by way of example, in Figure 3 can be used to carry out a wide variety of assembly and/or processing tasks within the work cell. These include transfer of components from pallets inctroduced into the work cell at P or on vibrational and/or belt-driven conveyors C; distribution of contact sensors at selected locations on the work table 16, manipulation and/or processing of a work piece held in manipulator 30; use of dedicated tools eg a pneumatic screw driver.

It will be appreciated that a robotic manipulator arrangement of this kind need not necessarily have six degrees of freedom, nor need the degrees of freedom be distributed in the manner described. Indeed, the first manipulator requires, as a minimum, a linear displacement along a horizontal ($X_1$) axis together with at least one other degree of freedom, while the second manipulator, positioned on the work table, requires at least two degrees of freedom. In general, the degrees of freedom are selected to suit the requirements of a specific application, having regard to the nature of the tasks to be performed, the available working space, and the preferred distribution of work stations within that space.

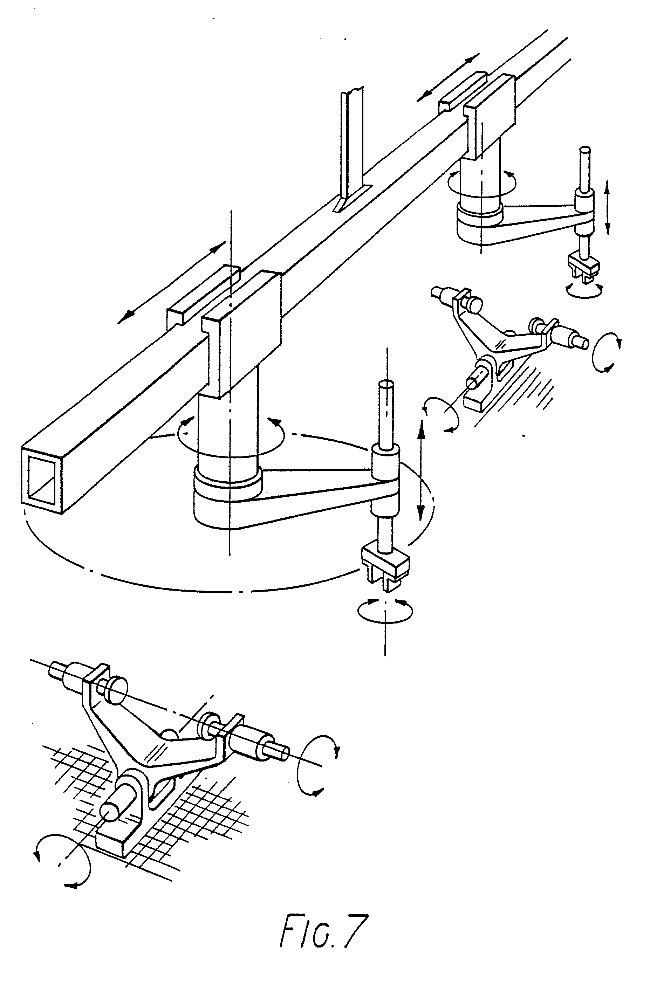

It will be appreciated that a robotic manipulator arrangement of the kind described by reference to Figure 2 could, in principle, be used to carry out an entire assembly procedure. An alternative arrangement, however, a robot manipulator arrangement, shown in Figure 7, includes a number of different work cells arranged in succession to define, in effect, an assembly line. Each cell has a respective manipulator arrangement with distributed axes, as described in hereinbefore, which is dedicated to a specific, but limited, task within the overall assembly procedure. Adjacent cells in the "line" are arranged to overlap with one another allowing a work piece to be transferred progressively along the line at different stages of completion.

In many assembly and/or processing operations the postional accuracy of the gripper device in relation to the work piece can be of critical importance, and so, hitherto, it has been customary to provide some form of compliant mechanism between the robot arm and the gripper device.

Our copending European Patent Application, Publication No. 0191246, the content of which is incorporated herein, describes one such mechanism which allows the gripper device to move relative to a manipulator arm along and/or about each of two mutually orthogonal axes provided relative displacement along the arm axes exceeds a predetermined amount. The inventors have found that in certain applications, particularly those requiring insertion of an object (eg a pin) in a closely fitting hole, it can be advantageous to allow an additional relative displacement about the arm axis.

## Claims

1. A linear drive mechanism comprising a frame member, means for driving the frame member in a linear direction, and means to drivingly couple the frame member to a load member, the coupling means being so arranged that, in use, the load member is displaced in said linear direction, relative to said frame member, in response to, and in the same sense as, a displacement of the frame member and whereby a displacement of the load in said linear direction exceeds that of the frame member.

2. A linear drive mechanism according to claim 1 wherein said frame member and said load member are mounted on a common guide member.

3. A linear drive mechanism according to claim 1 or claim 2 wherein said load member is coupled to said frame member by means of a band system.

4. A linear drive mechanism according to Claim 3 wherein said band system comprises a pair of bands, the ends of one band of the pair being attached respectively to the load member and to the frame member and the ends of the other band of the pair being attached respectively to the load member and to a location fixed with respect to both the load member and the frame member.

5. A linear drive mechanism according to Claim 1 suitable for use in a robotic manipulator arrangement wherein the load member includes a robotic manipulator.

6. A linear drive mechanism substantially as herein described by reference to the accompanying drawings.

FIG.1

0 266 096

FIG. 2

FIG.3

0 266 096

FIG. 4

FIG.5

FIG. 6

FIG. 7

## DOCUMENTS CONSIDERED TO BE RELEVANT

EP·87309092.2

| Category | Citation of document with indication, where appropriate, of relevant passages | Relevant to claim | CLASSIFICATION OF THE APPLICATION (Int. Cl.4) |
|---|---|---|---|
| A | EP - A2 - 0 086 885 (PROMA) <br> * Claim 1 * <br> -- | 1,2 | F 16 H 25/08 |
| A | DE - A - 2 337 401 (BENDIX) <br> * Claims 1,2; fig. 1 * <br> -- | 1,3 | |
| A | EP - A1 - 0 023 552 (MEYER) <br> * Page 2, line 15 - page 3, line 12; fig. * <br> -- | 1,3,4 | |
| A | EP - A1 - 0 155 362 (INT. BUSINESS MACHINES) <br> * Fig. 1 * <br> -- | 5,6 | |
| A | US - A - 4 593 571 (SCHWARZ) <br> ---- | | |

TECHNICAL FIELDS SEARCHED (Int. Cl.4)

F 16 H

B 65 B

B 65 G

B 66 D

D 01 H

B 25 J

The present search report has been drawn up for all claims

| Place of search | Date of completion of the search | Examiner |
|---|---|---|
| VIENNA | 28-01-1988 | HEMMELMEIER |